# FASCICULE DE BREVET EUROPEEN

(11) **EP 3 830 372 B1**
(45) Date de publication et mention de la délivrance du brevet: **05.07.2023**
(21) Numéro de dépôt: 19746092.6
(22) Date de dépôt: 31.07.2019
(51) Int. Cl.: E06B 9/17, E06B 9/174, E06B 9/50, E06B 9/72, F16D 3/68, F16F 15/124

(54) **ACTIONNEUR DOMOTIQUE ÉLECTROMÉCANIQUE**
ELEKTROMECHANISCHER DOMOTIK-AKTUATOR
ELECTROMECHANICAL HOME-AUTOMATION ACTUATOR

(30) Priorité: 01.08.2018 FR 1857198
(43) Date de publication de la demande: 09.06.2021
(73) Titulaire: Somfy Activites SA, 74300 Cluses (FR)
(72) Inventeur: SCHUEHMACHER, Cyril, 74700 Sallanches (FR); LEMAITRE, Sébastien, 74440 Mieussy (FR); PEZET, Jérôme, 74440 Taninges (FR); BRONDEX, Adrien, 74700 Domancy (FR); LAGARDE, Eric, 74700 Sallanches (FR)
(74) Mandataire: Novaimo
(86) Numéro de dépôt international: PCT/EP2019/070700
(87) Numéro de publication internationale: WO 2020/025707

(56) Documents cités:
- WO-A1-2005/090736
- DE-A1- 19 949 941
- DE-U1- 9 218 638

## Description

L'invention concerne un actionneur pour installation de fermeture, d'occultation ou de protection solaire. L'invention concerne aussi une installation comprenant un tel actionneur.

De manière générale, la présente invention concerne le domaine des dispositifs de fermeture, d'occultation ou de protection solaire comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite « écran ».

L'actionneur électromécanique est destiné à être monté à l'intérieur d'un tube d'enroulement sur lequel est enroulé l'écran. En outre, l'actionneur électromécanique comprend au moins un moteur électrique et un réducteur. Le moteur électrique et le réducteur génèrent des vibrations, lors du fonctionnement de l'actionneur électromécanique. Ces vibrations sont transmises aux éléments entourant le moteur électrique, notamment à un carter de l'actionneur électromécanique, au tube d'enroulement et à la structure supportant l'actionneur.

Par conséquent, lors de la mise en fonctionnement de l'actionneur électromécanique et dans une configuration assemblée de l'actionneur électromécanique dans l'installation, l'actionneur électromécanique engendre du bruit.

On connaît déjà le document WO2005/090736A1 qui décrit des amortisseurs de vibrations montés à l'intérieur d'un carter d'un actionneur électromécanique pour installation de fermeture ou de protection solaire. Il apparaît que le filtrage des vibrations entre le carter de l'actionneur et le point fixe n'est pas optimal dans les réalisations décrites dans ce document.

Le but de l'invention est de fournir un actionneur remédiant aux inconvénients mentionnés et améliorant les actionneurs connus de l'art antérieur. En particulier, l'invention propose un actionneur simple dont l'amortissement des vibrations transmises par l'actionneur à la structure le supportant est amélioré.

Selon l'invention, un actionneur électromécanique pour installation de fermeture, d'occultation ou de protection solaire, comprend un moteur électrique, un carter, un module mécanique de filtrage de vibrations, un module d'absorption de vibrations et un support de couple, insérés au moins partiellement dans le carter, le module mécanique de filtrage de vibrations comprenant une première extrémité et une deuxième extrémité, séparées par une longueur L. La première extrémité du module mécanique de filtrage de vibrations est liée mécaniquement directement ou indirectement au carter. La deuxième extrémité du module mécanique de filtrage de vibrations est liée mécaniquement au support de couple. Le module mécanique de filtrage de vibrations assure la liaison mécanique entre le carter et le support de couple en rotation autour d'un premier axe de l'actionneur. Le module d'absorption de vibrations lie mécaniquement le carter au support de couple en translation perpendiculairement au premier axe de l'actionneur en autorisant un degré de liberté en rotation entre le carter et le support de couple autour du premier axe.

Le module mécanique de filtrage de vibrations peut comprendre un joint d'Oldham ou un joint de Schmidt.

Le module mécanique de filtrage de vibrations peut comprendre au moins :
une première portion d'extrémité comprenant un premier anneau,
une portion intermédiaire; et
une pluralité de premiers bras, chaque premier bras reliant la portion intermédiaire au premier anneau.

Le module mécanique de filtrage de vibrations peut comprendre plusieurs plateaux annulaires disposés perpendiculairement au premier axe et juxtaposés le long du premier axe, dont au moins un plateau annulaire intermédiaire, chaque plateau annulaire intermédiaire étant relié à chacun des deux plateaux qui lui sont adjacents par au moins trois ponts de connexion.

Le carter peut recouvrir partiellement ou intégralement le module mécanique de filtrage de vibrations et/ou le module d'absorption de vibrations.

Le module d'absorption de vibrations peut comprendre une première bague en matériau souple, notamment en matériau élastomère et/ou viscoélastique, disposée autour d'une partie du support de couple.

La première bague en matériau souple peut comprendre des bossages formant sa ou ses surfaces en contact avec le carter et/ou le support de couple.

Le module d'absorption de vibrations peut comprendre une deuxième bague en matériau rigide, disposée autour de la première bague ou insérée dans la première bague.

La deuxième bague en matériau rigide peut comprendre des zones de renforcement et/ou de surépaisseur.

La deuxième bague peut comprendre au moins un élément de fixation au carter, notamment au moins une nervure et/ou au moins une rainure et/ou au moins un trou, en particulier au moins un trou taraudé.

Le module d'absorption de vibrations peut comprendre une collerette disposée axialement entre le support du couple et une extrémité axiale du carter.

Le carter et/ou le module d'absorption de vibrations peut comprendre une première butée et le support de couple peut comprendre une deuxième butée, les première et deuxième butées étant agencées de sorte à coopérer par contact pour limiter le déplacement en rotation du carter autour du premier axe relativement au support de couple, notamment les première et deuxième butées étant destinées à coopérer par contact lorsqu'un couple supérieur au couple nominal, notamment supérieur ou égal à 110 % du couple nominal, est produit par le moteur électrique.

L'actionneur peut comprendre un logement d'au moins une batterie dans le carter.

Selon l'invention, une installation domotique de fermeture, d'occultation ou de protection solaire comprend un écran, un tube d'enroulement et un actionneur électromécanique tel que défini précédemment, l'écran étant enroulable sur le tube d'enroulement entraîné en rotation par l'actionneur électromécanique.

L'invention sera mieux comprise à la lecture de la description qui va suivre, donnée uniquement à titre d'exemple et faite en se référant aux dessins annexés sur lesquels :
- la figure 1 est une vue schématique en coupe transversale d'une installation conforme selon un mode de réalisation ;
- la figure 2 est une vue schématique en perspective de l'installation illustrée à la figure 1 ;
- la figure 3 est une vue en coupe schématique d'un mode de réalisation d'un actionneur électromécanique de l'installation illustrée aux figures 1 et 2 ;
- la figure 4 est une vue en coupe longitudinale partielle d'une partie d'une variante de l'actionneur électromécanique illustré sur la figure 3 ;
- la figure 5 est une vue en coupe transversale de l'actionneur selon le plan V-V représenté sur la figure 4 ;
- la figure 6 est une vue en coupe transversale de l'actionneur selon le plan VI-VI représenté sur la figure 4 ;
- la figure 7 est une vue éclatée et en perspective d'une partie de l'actionneur ;
- les figures 8 et 9 sont des vues en perspective de la partie de l'actionneur représentée sur la figure 7, après assemblage ;
- la figure 10 est une vue en coupe longitudinale partielle d'une partie d'une variante de l'actionneur électromécanique illustré sur la figure 3 ;
- la figure 11 est une vue en perspective d'une variante d'une partie centrale ou intermédiaire d'un module de filtrage de vibrations illustré sur la figure 3.

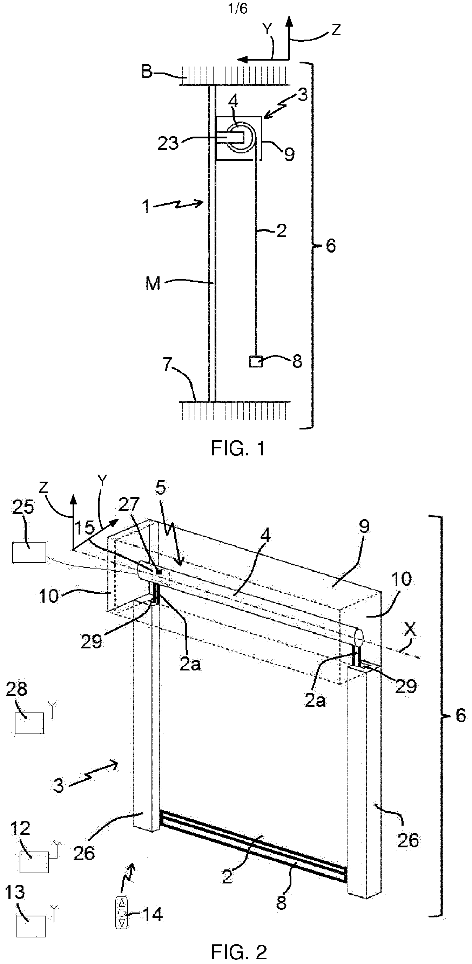

On décrit tout d'abord, en référence aux figures 1 et 2, un mode de réalisation d'une installation 6. Cette installation équipe un bâtiment B comprenant une ouverture 1, notamment une fenêtre ou une porte. L'installation 6 comprend un dispositif 3 de fermeture, d'occultation 3 ou de protection solaire, en particulier un store motorisé. Le dispositif 3 comprend un écran 2.

Le dispositif 3 peut être un store, notamment une toile, enroulable, un store plissé ou à lames. Le dispositif 3 peut également être un volet roulant ou encore un portail roulant. Le dispositif 3 peut encore être de tout autre type.

On décrit en outre, en référence aux figures 1 et 2, un mode de réalisation du dispositif 3 sous la forme d'un store motorisé enroulable 3.

Le dispositif 3 comprend un tube d'enroulement 4 et un dispositif d'entraînement motorisé 5 comprenant un actionneur électromécanique 11.

L'écran 2 du dispositif 3 est enroulé sur le tube d'enroulement 4 entraîné par le dispositif d'entraînement motorisé 5. Ainsi, l'écran est mobile entre une position enroulée, en particulier une position haute, et une position déroulée, en particulier une position basse.

L'écran 2 du dispositif d'occultation 3 est un écran de fermeture, d'occultation et/ou de protection solaire, s'enroulant et se déroulant autour du tube d'enroulement 4, dont le diamètre intérieur est sensiblement supérieur au diamètre externe de l'actionneur électromécanique 11, de sorte que l'actionneur électromécanique 11 puisse être inséré dans le tube d'enroulement 4, lors de l'assemblage du dispositif 3.

Avantageusement, le dispositif 3 comprend un dispositif de maintien 9, 23. Par exemple, le dispositif de maintien 9, 23 peut comprendre deux supports 23. Un support 23 est disposé à chaque extrémité du tube d'enroulement 4, dans une configuration assemblée du dispositif 3. Ainsi, le tube d'enroulement 4 est maintenu par l'intermédiaire des supports 23. Un seul des supports 23 est représenté sur la figure 1. Les supports 23 permettent de lier mécaniquement le dispositif 3 à la structure du bâtiment B, notamment à un mur M du bâtiment B. Avantageusement, le dispositif de maintien 9, 23 peut comprendre un caisson 9. En outre, le tube d'enroulement 4 et au moins une partie de l'écran 2 sont logés à l'intérieur du caisson 9, dans la configuration assemblée du dispositif 3. De manière générale, le caisson 9 est disposé au-dessus de l'ouverture 1, ou encore en partie supérieure de l'ouverture 1. Comme illustré sur la figure 1, les supports 23 sont de préférence également logés à l'intérieur du caisson 9.

En variante, représentée sur la figure 2, le tube d'enroulement 4 est maintenu par l'intermédiaire du caisson 9, en particulier par l'intermédiaire de joues 10 du caisson 9.

Avantageusement, le dispositif 3 peut également comprendre deux coulisses latérales 26, comme illustré à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, dans la configuration assemblée du dispositif 3, de sorte à guider l'écran 2, lors de l'enroulement et du déroulement de l'écran 2 autour du tube d'enroulement 4.

L'actionneur électromécanique 11 est par exemple de type tubulaire. Il permet de mettre en rotation le tube d'enroulement 4 autour de son axe longitudinal X de sorte à dérouler ou à enrouler l'écran 2 du dispositif 3.

Dans l'état monté, l'actionneur électromécanique 11 est inséré dans le tube d'enroulement 4.

Avantageusement, le dispositif 3 comprend également une barre de charge 8 pour exercer une tension sur l'écran 2.

Le store enroulable, qui forme le dispositif 3, comprend une toile, formant l'écran 2 du store enroulable 3. Une première extrémité de l'écran 2, en particulier l'extrémité supérieure de l'écran 2, dans la configuration assemblée du dispositif 3, est fixée au tube d'enroulement 4. En outre, une deuxième extrémité de l'écran 2, en particulier l'extrémité inférieure de l'écran 2, dans la configuration assemblée du dispositif 3, est fixée à la barre de charge 8.

Par exemple, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre un bord d'un caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée par liaison filaire ou non filaire avec l'unité de commande centrale 13.

Avantageusement, l'unité de commande centrale 13 peut piloter l'unité de commande locale 12, ainsi que d'autres unités de commande locales similaires et réparties dans le bâtiment.

Avantageusement, l'unité de commande centrale 13 peut être en communication avec une station météorologique disposée à l'intérieur du bâtiment B ou déportée à l'extérieur du bâtiment B, incluant, notamment un ou plusieurs capteurs pouvant être configurés pour déterminer, par exemple, une température, une luminosité, ou encore une vitesse de vent, dans le cas où la station météorologique est déportée à l'extérieur du bâtiment B.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif 3, pouvant être émises, notamment, par l'unité de commande locale 12, l'unité de commande centrale 13 ou la télécommande 14.

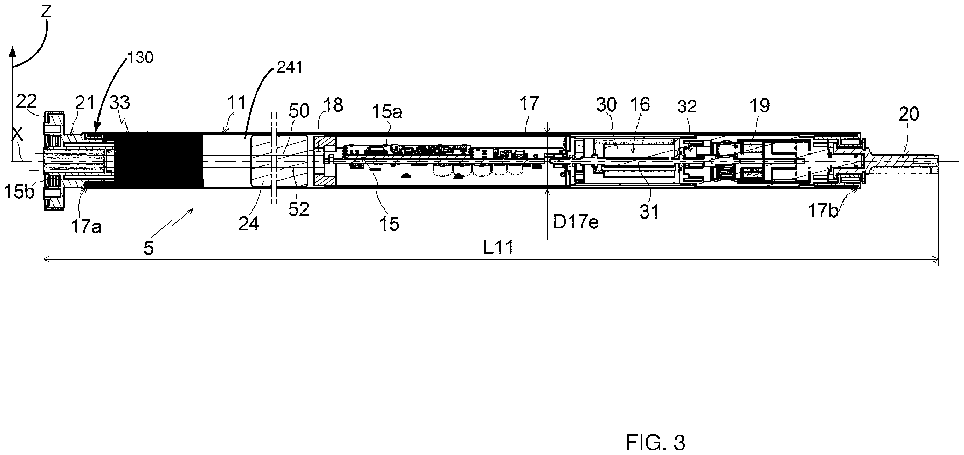

On décrit à présent, plus en détail et en référence à la figure 3, un mode de réalisation de l'actionneur électromécanique 11 des figures 1 et 2.

L'actionneur électromécanique 11 comprend un moteur électrique 16. Le moteur électrique 16 comprend un rotor 31 et un stator 30, positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir, notamment enrouler, ou fermer, notamment dérouler, l'écran 2, comme décrit précédemment.

Avantageusement, l'unité électronique de contrôle 15 comprend également un module de communication 27, comme illustré sur la figure 2, en particulier de réception d'ordres de commande. Les ordres de commande sont émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité de commande locale 12 ou l'unité électronique de contrôle 15 peuvent également être en communication avec un serveur 28, tel qu'illustré sur la figure 2, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

Avantageusement, l'actionneur électromécanique 11 est alimenté en énergie électrique au moyen d'au moins une batterie 24.

Ici, l'actionneur électromécanique 11 comprend un câble d'alimentation électrique 18 permettant son alimentation en énergie électrique, en particulier à partir de la batterie 24.

Avantageusement, la batterie 24 est de type rechargeable et alimente en énergie électrique l'actionneur électromécanique 11.

Avantageusement, la batterie 24 est disposée dans un logement 241 à l'intérieur du carter 17 de l'actionneur électromécanique 11.

Avantageusement, la batterie 24 comprend un ou plusieurs éléments de stockage d'énergie, non représentés. Les éléments de stockage d'énergie de la batterie 24 peuvent être, notamment, des accumulateurs rechargeables ou encore des piles rechargeables.

Avantageusement, le dispositif d'entraînement motorisé 5, notamment l'actionneur 11, en particulier l'unité électronique de contrôle 15, comprend des éléments de chargement configurés pour charger la batterie 24 à partir de l'énergie électrique fournie par une source d'alimentation électrique externe 25, telle qu'illustrée sur la figure 2.

A titre d'exemple nullement limitatif, la source d'alimentation électrique externe 25 peut être un chargeur pouvant être branché sur une prise électrique murale, de sorte à recharger la batterie 24 à partir d'un réseau d'alimentation électrique du secteur.

En variante, non représentée, la source d'alimentation électrique externe 25 est une batterie auxiliaire, de sorte à recharger la batterie 24.

Ainsi, la batterie 24 peut être rechargée au moyen de la batterie auxiliaire formant la source d'alimentation électrique externe 25, en particulier dans le cas où le dispositif 3 est éloigné d'une prise électrique murale.

Avantageusement, l'unité électronique de contrôle 15 comprend une première carte électronique 15a et une deuxième carte électronique 15b.

Avantageusement, la première carte électronique 15a est configurée pour contrôler le moteur électrique 16. En outre, la deuxième carte électronique 15b est configurée pour contrôler la batterie 24, notamment pour gérer la charge ou recharge de la batterie. Cette carte électronique 15b peut notamment supporter un ou plusieurs boutons poussoirs, une ou plusieurs diodes électroluminescentes, ainsi que par exemple des contacts entrée-sortie de programmation.

Ici et de manière nullement limitative, les éléments de chargement sont disposés au niveau de la deuxième carte électronique 15b.

En variante, non représentée, l'actionneur électromécanique 11 est alimenté en énergie électrique par un réseau d'alimentation en énergie électrique du secteur.

L'actionneur électromécanique 11 comprend un carter 17, en particulier tubulaire. Par exemple, le carter 17 de l'actionneur électromécanique 11 est de forme cylindrique, notamment de révolution.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19 et un arbre de sortie 20.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend également un frein 32.

A titre d'exemples nullement limitatifs, le frein 32 peut être un frein à ressort, un frein à came ou un frein électromagnétique.

Avantageusement, le moteur électrique 16, le réducteur 19 et, éventuellement, le frein 32 sont disposés à l'intérieur du carter 17 de l'actionneur électromécanique 11.

Avantageusement, l'actionneur électromécanique 11 peut également comprendre un dispositif de détection de fin de course et/ou d'obstacle, pouvant être mécanique ou électronique.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne, non représentée, insérée autour d'une première extrémité 17a du carter 17 de l'actionneur électromécanique 11. La couronne permet ainsi de réaliser un palier. La deuxième liaison pivot, non représentée, est réalisée au niveau d'une deuxième extrémité du tube d'enroulement 4.

Avantageusement, l'actionneur électromécanique 11 comprend un support de couple 21 (ou tête d'actionneur 21). Le support de couple 21 est disposé au niveau de la première extrémité 17a du carter 17 de l'actionneur électromécanique 11, dans une configuration assemblée de l'actionneur électromécanique 11. Le support de couple permet de reprendre les efforts exercés par l'actionneur et d'assurer la reprise des efforts exercés par l'actionneur, en particulier le couple exercé par l'actionneur, par la structure du bâtiment B. Le support de couple permet avantageusement de reprendre en outre des efforts exercés par le tube d'enroulement, notamment le poids du tube d'enroulement, de l'actionneur et de l'écran, et d'assurer la reprise de ces efforts par la structure du bâtiment B.

Ainsi, le support de couple 21 de l'actionneur électromécanique 11 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11, en particulier l'extrémité 17a du carter 17 recevant la couronne constituant un palier de guidage en rotation du tube d'enroulement.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen du câble d'alimentation électrique 18.

Avantageusement, l'unité électronique de contrôle 15 peut être disposée au moins en partie à l'intérieur du carter 17 de l'actionneur électromécanique 11.

Par ailleurs, l'unité électronique de contrôle 15 peut être disposée au moins en partie à l'extérieur du carter 17 de l'actionneur électromécanique 11 et, en particulier, montée sur l'un des deux supports 23, sur l'une des joues 10 du caisson 9 ou dans le support de couple 21.

Ici, la première carte électronique 15a de l'unité électronique de contrôle 15 est disposée à l'intérieur du carter 17 de l'actionneur électromécanique 11. En outre, la deuxième carte électronique 15b est disposée à l'intérieur du support de couple 21 de l'actionneur électromécanique 11.

Ici et comme illustré à la figure 3, le support de couple 21 comprend un couvercle 22. En outre, la deuxième carte électronique 15b est disposée à l'intérieur d'un logement formé entre le support de couple 21 et le couvercle 22.

Avantageusement, le support de couple 21 comprend au moins un bouton, non représenté, de sorte à permettre un réglage de l'actionneur électromécanique 11, pouvant être, par exemple, une position de fin de course ou une réinitialisation des paramètres de l'actionneur électromécanique 11.

Ici, le support de couple 21 comprend un seul bouton.

Le nombre de boutons du support de couple n'est pas limitatif et peut être différent. Il peut être, notamment, supérieur ou égal à deux.

Avantageusement, le support de couple 21 comprend au moins un dispositif d'éclairage, non représenté, de sorte à permettre une indication visuelle, pouvant être, par exemple, un état de charge de la batterie 24.

Avantageusement, le dispositif d'éclairage comprend au moins une source d'éclairage, non représentée, en particulier une diode électroluminescente, montée sur la deuxième carte électronique 15b et, éventuellement, un capot transparent ou translucide et/ou un guide de lumière, pour permettre le passage de la lumière émise par la source d'éclairage.

Ici, le support de couple 21 comprend un seul dispositif d'éclairage.

Le nombre de dispositifs d'éclairage n'est pas limitatif et peut être différent. Il peut être, notamment, supérieur ou égal à deux.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif 3, de sorte à ouvrir ou fermer l'ouverture 1.

De préférence, l'actionneur électromécanique 11 comprend, outre le moteur électrique 16, le support de couple 21 et le carter 17, un module mécanique de filtrage de vibrations 33 et un module d'absorption de vibrations 130. Le module mécanique de filtrage de vibrations 33 lie mécaniquement le moteur électrique et/ou le carter au support de couple au moins en rotation autour de l'axe X de l'actionneur. Le module d'absorption de vibrations lie mécaniquement le carter au support de couple au moins en translation perpendiculairement au premier axe X de l'actionneur, en particulier selon un axe Z vertical, c'est-à-dire parallèle à la direction du champ de gravitation terrestre.

Une direction Y est encore définie comme perpendiculaire aux directions X et Z.

Ainsi, le module mécanique de filtrage de vibrations 33 permet de transmettre principalement, voire exclusivement, les couples autour de l'axe X du moteur électrique et/ou du carter au support de couple. Pour ce faire, le module mécanique de filtrage de vibrations présente principalement une rigidité (ou raideur) en torsion autour de l'axe X entre ses première et deuxième extrémités. Ses rigidités (ou raideurs) aux autres sollicitations (traction, compression, flexion) quelle que soit la direction et la torsion selon les directions Y ou Z perpendiculaires à la direction X sont largement inférieures. Ces faibles rigidités permettent au module mécanique de filtrage de vibrations de transmettre très peu de vibrations de type traction-compression quelle que soit la direction de ces vibrations. Ces faibles rigidités permettent aussi au module mécanique de filtrage de vibrations de transmettre très peu de vibrations de type torsion dont la direction est perpendiculaire à l'axe X. Ceci permet d'optimiser les caractéristiques physiques du module mécanique de filtrage de vibrations pour un bon filtrage des vibrations sans autre contrainte qu'une tenue mécanique à la torsion autour de l'axe X. Autrement dit, le module mécanique de filtrage de vibrations 33 est agencé et/ou configuré de sorte à transmettre essentiellement un couple (moment de force) autour de la direction X, c'est-à-dire qu'il est agencé et/ou configuré de sorte à minimiser la transmission des autres sollicitations mécaniques (couples autour des axes Y et Z et forces quelles que soient leurs directions).

Les autres efforts qui doivent être repris par le support de couple, principalement des efforts dus à la gravité selon l'axe Z et liés au poids de l'actionneur, du tube d'enroulement et de l'écran sont transmis au support de couple via le module d'absorption de vibrations 130.

Ainsi, le module d'absorption de vibrations est placé au niveau d'une voie de transfert des vibrations solidiennes, c'est-à-dire radialement relativement à l'axe X. Le module d'absorption de vibrations présente principalement une rigidité (ou raideur) en compression selon les axes perpendiculaires à l'axe X. Ses rigidités (ou raideurs) aux autres sollicitations (traction, compression) selon la direction X et à la reprise axiale (en torsion autour de la direction X) sont bien moins grandes. Cette faible rigidité en compression permet au module d'absorption de vibrations de transmettre très peu de vibrations entre le carter 17 et le support de couple 21. Ceci permet d'optimiser les caractéristiques physiques du module d'absorption de vibrations pour un bon amortissement des vibrations sans autre contrainte qu'une grande souplesse en compression selon l'axe Z perpendiculaire à l'axe X. Autrement dit, le module d'absorption de vibrations 130 est agencé et/ou configuré de sorte à transmettre essentiellement des forces perpendiculairement à la direction X, c'est-à-dire qu'il est agencé et/ou configuré de sorte à minimiser la transmission des autres sollicitations mécaniques (moments de forces autour des directions X, Y et Z et forces selon la direction X).

De préférence, le module mécanique de filtrage de vibrations 33 et le module d'absorption de vibrations 130 sont des éléments séparés et distincts. Ils peuvent être agencés à distance l'un de l'autre. Ils peuvent aussi être agencés en contact l'un avec l'autre.

Dans un mode de réalisation non représenté, le module mécanique de filtrage de vibrations peut comprendre ou être un joint d'Oldham. Par exemple :
- le support de couple comprend un premier élément ou est fixé à un premier élément,
- le carter et/ou le moteur comprend un deuxième élément ou est fixé à un deuxième élément, et
- un troisième élément est lié au premier élément par une première liaison glissière et est lié au deuxième élément par une deuxième liaison glissière, les première et deuxième liaisons glissières étant d'axes non parallèles entre eux, notamment d'axes perpendiculaires entre eux. Les première et deuxième liaisons glissières sont de préférence d'axes perpendiculaires à l'axe X.

Ces liaisons glissières assurent des degrés de liberté radialement par rapport à l'axe X, ce qui permet au joint d'Oldham de couper la transmission des vibrations suivant les directions Y et Z.

Dans un mode de réalisation non représenté, le module mécanique de filtrage de vibrations peut comprendre ou être un joint de Schmidt. Par exemple :
- le support de couple comprend un premier élément ou est fixé à un premier élément,
- le carter et/ou le moteur comprend un deuxième élément ou est fixé à un deuxième élément, et
- un troisième élément est lié au premier élément par une première liaison mécanique assurant un mouvement de translation circulaire entre le troisième élément et le premier élément et est lié au deuxième élément par une deuxième liaison mécanique assurant un mouvement de translation circulaire entre le troisième élément et le deuxième élément. Les première et deuxième liaisons mécaniques comprennent par exemple des premières biellettes reliant le troisième et le premier élément et des deuxièmes biellettes reliant le troisième et le deuxième élément.

Ces liaisons de type rotule ou pivot assurent des degrés de liberté radialement par rapport à l'axe X, ce qui permet au joint de Schmidt de couper la transmission des vibrations suivant les directions Y et Z.

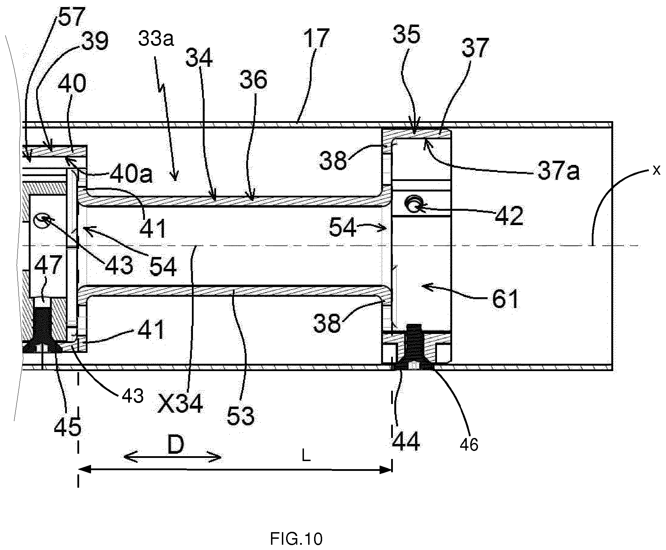

Dans un mode de réalisation représenté sur la figure 10, le module mécanique de filtrage de vibrations 33a comprend au moins :
- une première portion d'extrémité 35 comprenant un premier anneau 37,
- une portion intermédiaire 36, et
- une pluralité de premiers bras 38, chaque premier bras 38 reliant la portion intermédiaire 36 au premier anneau 37.

De préférence, le module mécanique de filtrage de vibrations 33a comprend encore :
- une deuxième portion d'extrémité 39 comprenant un deuxième anneau 40, et
- une pluralité de deuxième bras 41, chaque deuxième bras 41 reliant la portion intermédiaire 36 au deuxième anneau 40.

La souplesse en flexion de ce type de module mécanique de filtrage de vibrations 33a assure un degré de liberté, même si celui-ci comprend une certaine raideur par rapport à un degré de liberté de type glissière comme peut présenter un joint d'Oldham.

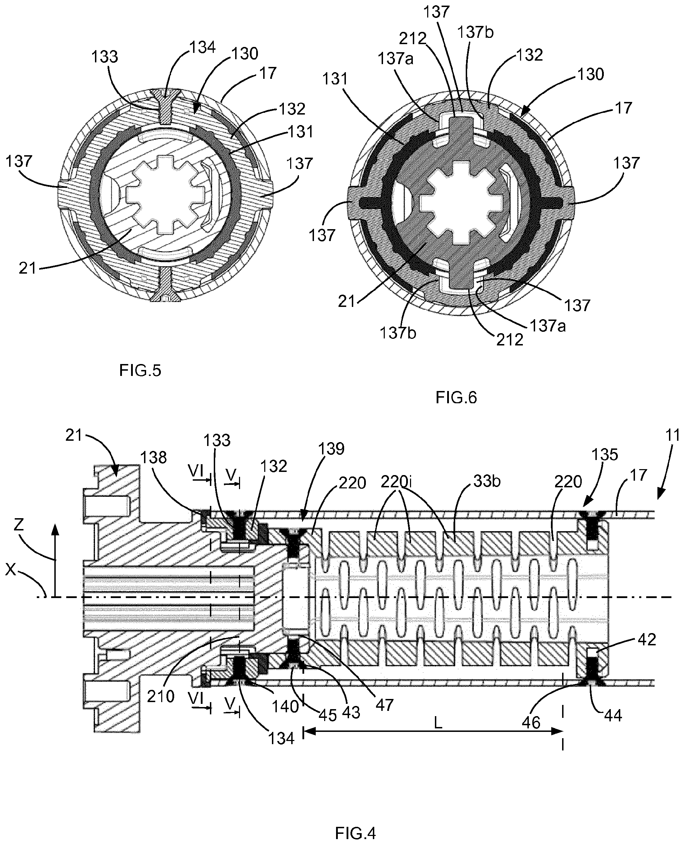

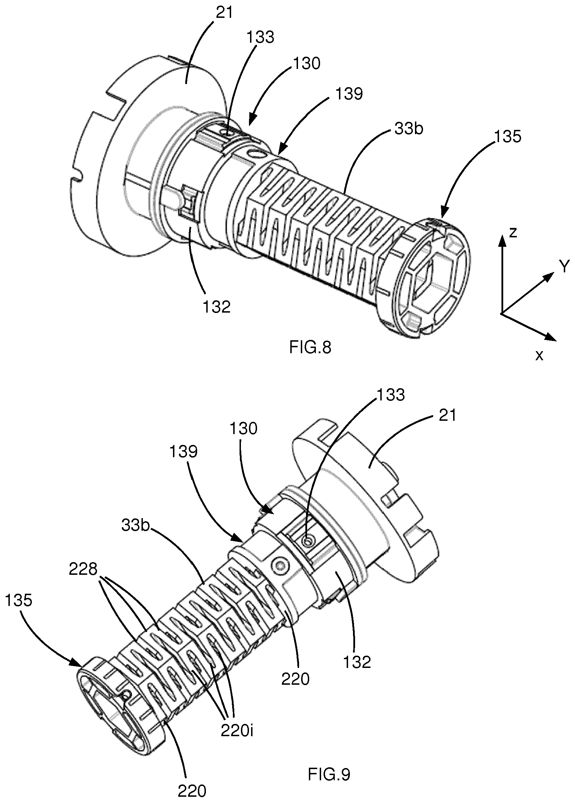

Dans un mode de réalisation représenté sur les figures 4 à 9, le module mécanique de filtrage de vibrations 33b comprend plusieurs plateaux annulaires 220 disposés perpendiculairement au premier axe X et juxtaposés le long du premier axe, dont au moins un plateau annulaire intermédiaire 220i. Chaque plateau annulaire intermédiaire est relié à chacun des deux plateaux qui lui sont adjacents par des ponts de connexion, notamment au moins trois ponts de connexion 228. Ces plateaux sont agencés entre une première portion d'extrémité 135 et une deuxième portion d'extrémité 139.

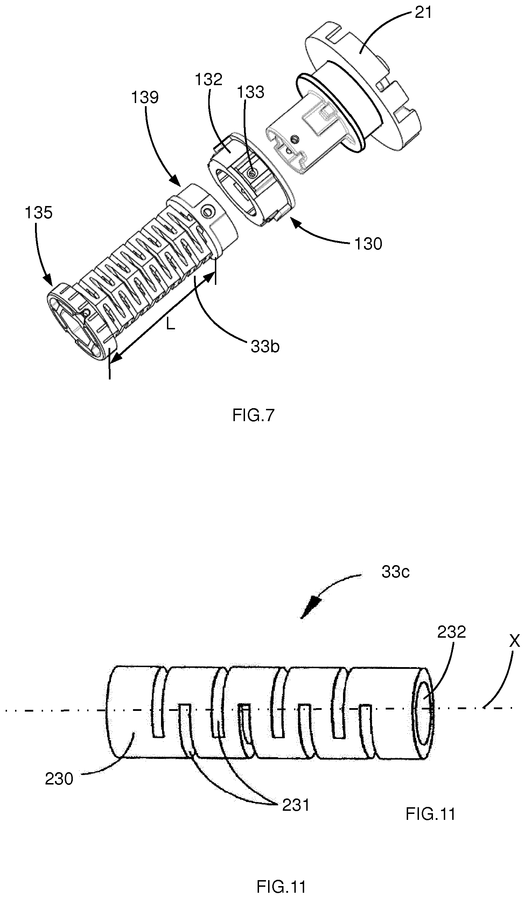

Dans un mode de réalisation représenté partiellement sur la figure 11, le module mécanique de filtrage de vibrations 33c est réalisé sur un modèle présenté dans la demande WO2005090736. Le module mécanique de filtrage de vibrations 33b comprend, entre deux portions d'extrémités (non représentées et destinées à fixer le module à d'autres pièces de l'actionneur qui sont adjacentes au module), un corps cylindrique 230 muni de découpes 231 orientées perpendiculairement ou sensiblement perpendiculairement à l'axe du corps cylindrique. De préférence, les découpes s'étendent sur plus de la moitié de la section (perpendiculaire à l'axe X) du corps cylindrique. Avantageusement, deux découpes adjacentes sont décalées l'une par rapport à l'autre longitudinalement selon l'axe X et angulairement l'une par rapport à l'autre autour de l'axe X. De préférence, le corps cylindrique est cylindrique de révolution. Alternativement, le corps cylindrique peut être à section polygonale (perpendiculairement à l'axe X). De préférence encore, le corps cylindrique est creux ou présente une ouverture 232 d'axe X.

La souplesse en flexion de ces trois derniers types de module mécanique de filtrage de vibrations 33b assure un degré de liberté, même si celui-ci comprend une certaine raideur par rapport à un degré de liberté de type glissière comme peut présenter un joint d'Oldham.

Dans les différents modes de réalisation du module mécanique de filtrage de vibrations décrits plus haut, une première extrémité 35, 135 du module mécanique de filtrage de vibrations 33 est fixée directement ou indirectement au carter et une deuxième extrémité 39, 139 du module mécanique de filtrage de vibrations 33 est fixée au support de couple. Ces extrémités 35 ; 135, 39 ; 139 sont séparées par une longueur L. Par exemple, la distance L est la distance minimale mesurée parallèlement à l'axe X entre un point de contact entre
- La première extrémité et le carter ; et
- La deuxième extrémité et le support de couple.

Par exemple, la distance est comprise entre 1,5 fois et 4 fois le diamètre extérieur du carter 17, de préférence entre 2 fois et 3 fois le diamètre extérieur du carter 17.

Le carter s'étend préférentiellement au-dessus de l'ensemble du module mécanique de filtrage de vibrations pour masquer et protéger celui-ci contre les éléments extérieurs (poussières, pollution...).

De préférence, le module mécanique de filtrage de vibrations est fixé directement au carter entre le moteur et le support de couple. De préférence encore, le module mécanique de filtrage de vibrations est fixé au carter entre le logement de batterie 241 et le support de couple, le logement de batterie étant disposé entre le moteur et le support de couple.

Toutefois, complémentairement ou alternativement, la première extrémité du module mécanique de filtrage de vibrations 33 peut être fixée au moteur, en particulier au stator du moteur, celui-ci étant fixé au carter. Alternativement, la première extrémité du module mécanique de filtrage de vibrations 33 peut être fixée au logement de batterie 241, celui-ci étant lui-même fixé au carter.

Ainsi, le carter comprend une portion d'extrémité, comprise entre la zone de fixation du module mécanique de filtrage de vibrations au carter ou la zone de fixation de l'élément sur lequel est lui-même fixé en rotation le module mécanique de filtrage de vibrations et son extrémité proche du support de couple.

Cette portion d'extrémité a une longueur L' supérieure ou égale à la longueur L associée au module mécanique de filtrage de vibrations, qui autorise un débattement radial relativement à l'axe X du carter par rapport au support de couple. La souplesse en compression radiale du module d'absorption de vibrations permet d'absorber les mouvements radiaux, selon un axe perpendiculaire à l'axe de rotation X, du carter 17 par rapport au support de couple 21. D'autre part, le degré de liberté en rotation entre carter 17 par rapport au support de couple 21 permet au module d'absorption de vibrations de ne pas interférer dans le fonctionnement du module mécanique de filtrage de vibrations.

Avantageusement, quel que soit le mode de réalisation du module mécanique de filtrage de vibrations, chaque portion d'extrémité 35 ; 135, 39 ; 139 du module mécanique de filtrage de vibrations 33 comprend respectivement une pluralité de premiers et de deuxièmes trous de fixation 42, 43, en particulier au nombre de trois disposés avec un angle de 120° l'un par rapport à l'autre, autour de l'axe de rotation X.

Le nombre et la position angulaire des premiers et des deuxièmes trous de fixation ne sont pas limitatifs et peuvent être différents. Les premiers et les deuxièmes trous de fixation peuvent être au nombre de deux ou plus et, par exemple, au nombre de deux et disposés avec un angle de 180° l'un par rapport à l'autre.

Avantageusement, les premiers et deuxièmes trous de fixation 42, 43 sont ménagés au niveau de zones de renforcement et/ou de surépaisseur, de sorte à garantir la tenue de la fixation, d'une part, entre la première portion d'extrémité 35 ; 135 et le carter 17 et, d'autre part, entre la deuxième portion d'extrémité 39 ; 139 et le support de couple 21.

Avantageusement, le carter 17 et le support de couple 21 de l'actionneur électromécanique 11 comprennent, en outre, respectivement des trous de fixation 46, 47, en particulier au nombre de trois disposés avec un angle de 120° l'un par rapport à l'autre, autour de l'axe de rotation X.

Ainsi, dans la configuration assemblée de l'actionneur électromécanique 11, des premiers éléments de fixation 44 coopèrent, autrement dit sont configurés pour coopérer, avec les premiers trous de fixation 42 et les trous de fixation 46 du carter 17, pouvant également être appelés premiers trous de fixation 46 du carter 17. En outre, dans la configuration assemblée de l'actionneur électromécanique 11, des deuxièmes éléments de fixation 45 coopèrent, autrement dit sont configurés pour coopérer, avec les deuxièmes trous de fixation 43 et les trous de fixation 47 du support de couple 21.

Les premiers éléments de fixations sont par exemple des vis, notamment des vis à têtes fraisées. Les deuxièmes éléments de fixations sont par exemple des vis, notamment des vis à têtes fraisées.

La fixation du module mécanique de filtrage de vibrations au support de couple peut alternativement ou complémentairement être réalisée à l'aide d'une ou plusieurs rainures, respectivement nervures, réalisées à l'extrémité du module mécanique de filtrage de vibrations et coopérant avec une ou plusieurs nervures, respectivement rainures, réalisées à l'extrémité du support de couple.

Le module d'absorption de vibrations 130 peut comprendre une première bague 131 en matériau souple, notamment en matériau élastomère, disposée autour d'une partie 210 du support de couple. Le matériau souple peut être notamment un élastomère thermoplastique. Cette première bague est en outre placée dans le carter 17. Ainsi, les efforts exercés par le carter sur le support de couple perpendiculairement à l'axe X transitent au travers de la première bague 131. En choisissant correctement la matière et la géométrie de cette première bague, on peut transmettre ces efforts tout en minimisant la transmission de vibrations perpendiculairement à l'axe X. La première bague peut ne pas être fermée autour de l'axe X. Elle peut même consister en plusieurs éléments discrets rapportés sur une deuxième bague 132 en une autre matière.

En particulier, le module d'absorption de vibrations peut comprendre cette deuxième bague. La deuxième bague est réalisée en un matériau rigide. Le matériau rigide peut être notamment un polyamide, par exemple du PA6.6. Par exemple, la deuxième bague est disposée autour de la première bague. La présence de la bague rigide est préférée au niveau du contact entre deux pièces en rotation, pour faciliter cette rotation.

La première bague peut être surmoulée dans la deuxième bague. Alternativement, la première bague peut être surmoulée autour de la deuxième bague. Alternativement encore, la première bague peut être surmoulée entre deuxième bague et le support de couple. La première bague pourrait consister en un joint torique monté sur la deuxième bague.

De préférence, la première bague comprend des bossages ou godrons formant ses surfaces en contact avec le carter et/ou le support de couple, les bossages étant préférentiellement arrangés parallèlement à un axe de symétrie X130 du module d'absorption de vibrations. Cet axe X130 est de préférence confondu avec l'axe X lorsque l'actionneur est assemblé. Ces bossages permettent de limiter le contact entre le module d'absorption de vibrations et le carter et/ou le support de couple, ainsi que de limiter la raideur de ce contact, permettant ainsi de limiter la transmission de vibrations.

La deuxième bague 132 comprend au moins un élément de fixation 133 au carter, notamment au moins un trou, en particulier au moins un trou taraudé.

Par exemple, la deuxième bague 132 comprend plusieurs trous de fixation 133, en particulier au nombre de trois disposés avec un angle de 120° l'un par rapport à l'autre, autour de l'axe de rotation X.

Le nombre et la position angulaire des trous de fixation 133 ne sont pas limitatifs et peuvent être différents. Les trous de fixation peuvent être au nombre de deux ou plus et, par exemple, au nombre de deux et disposés avec un angle de 180° l'un par rapport à l'autre.

Avantageusement, le carter 17 de l'actionneur électromécanique 11 comprend, en outre un ou plusieurs trous de fixation 140 coïncidant avec le ou les trous de fixation 133.

Ainsi, dans la configuration assemblée de l'actionneur électromécanique 11, des éléments de fixation 134 coopèrent avec les trous de fixation 133 et les trous de fixation 140 du carter 17 pour fixer le module d'absorption de vibrations, en particulier la deuxième bague, au carter.

Préférentiellement, les trous de fixation 133 sont situés au niveau de zones de renforcement et/ou de surépaisseur formés par la bague rigide.

Ces surépaisseurs permettent notamment de garantir la fixation sans que les éléments de fixation ne créent de liaison avec le support de couple.

Les éléments de fixations sont par exemple des vis ou des goupilles, notamment des vis à têtes fraisées.

La fixation du module d'absorption de vibrations au carter peut alternativement ou complémentairement être réalisée à l'aide d'une ou plusieurs rainures, respectivement nervures, réalisées sur le module d'absorption de vibrations, notamment sur la deuxième bague, et coopérant avec une ou plusieurs nervures, respectivement rainures, réalisées sur le carter 17.

De préférence, un jeu axial selon l'axe X est ménagé entre l'extrémité du carter 17 et le support de couple. Ce jeu peut être comblé ou partiellement comblé par une partie du module d'absorption de vibrations, en particulier par une partie de la première bague.

A cet effet, le module d'absorption de vibrations peut comprendre une collerette 138 disposée axialement entre le support du couple 31 et une extrémité axiale du carter 17 lorsque l'actionneur est assemblé. Cette collerette 138 assure également une étanchéité entre le support de couple et le carter ainsi qu'un filtrage des vibrations axiales le cas échéant.

Dans le mode de réalisation décrit, le module d'absorption de vibrations est fixé au carter. Par contre, le support de couple est simplement monté glissant dans le module d'absorption de vibrations est fixé au carter. Il n'y a de préférence pas d'élément arrêtant axialement (en translation et en rotation) le module d'absorption de vibrations relativement au support de couple. Le module d'absorption de vibrations et le support de couple sont ainsi de préférence liés entre eux par une liaison mécanique de type pivot glissant.

Le module d'absorption de vibrations constitue également une butée axiale pour le module de filtrage de vibrations en cas d'effort axial générant un écart entre le support de couple et le carter. En effet, ces deux modules sont montés avec un jeu axial restreint et par exemple lors d'un désassemblage de l'actionneur hors du tube d'enroulement, la contrainte axiale exercée sur le support de couple est exercée également sur le module de filtrage de vibrations, tant que celui-ci n'est pas en butée contre le module d'absorption de vibrations. Ainsi, le module de filtrage de vibrations est protégé contre une tension excessive.

De préférence, le carter et/ou le module d'absorption de vibrations comprend une première butée 137a, 137b et le support de couple 21 comprend une deuxième butée 212, les première et deuxième butées étant agencées de sorte à coopérer par contact pour limiter le déplacement en rotation autour du premier axe du carter relativement au support de couple. Notamment les première et deuxième butées sont destinées à coopérer par contact lorsqu'un couple supérieur au couple nominal, notamment supérieur ou égal à 110 % du couple nominal, est produit par le moteur électrique.

Par exemple, des premières butées sont constituées par des flancs 137a et 137b de rainures 137 réalisées dans la deuxième bague. Les flancs s'étendent sensiblement radialement relativement à l'axe X.

Par exemple, des deuxièmes butées sont constituées par des nervures 212 réalisées sur le support de couple et s'étendant sensiblement radialement relativement à l'axe X.

En pratique, les première et deuxième butées ne sont pas en contact lorsque l'actionneur est mis sur le marché, même si des problématiques de fluage des élastomères peuvent ensuite provoquer un contact au cours de la durée de vie de l'actionneur.

De même les première et deuxième butées ne sont pas en contact lorsque l'actionneur fournit un couple inférieur au couple nominal.

Le contact entre les butées a pour but de protéger le module mécanique de filtrage de vibrations contre une éventuelle rupture en cas de fort couple.

Dans les différents modes de réalisation, le carter recouvre partiellement ou intégralement le module mécanique de filtrage de vibrations et/ou le module d'absorption de vibrations. Ainsi, de préférence, lorsqu'on regarde l'actionneur selon une direction perpendiculaire à l'axe X, le module mécanique de filtrage de vibrations est complètement caché dans le carter et n'est pas visible. De même, de préférence, lorsqu'on regarde l'actionneur selon une direction perpendiculaire à l'axe X, le module d'absorption de vibrations est complètement caché dans le carter et n'est pas visible.

En variante non représentée, l'actionneur électromécanique 11 peut être inséré dans un rail, en particulier de section carrée ou rectangulaire, pouvant être ouvert à l'une ou à ses deux extrémités, dans la configuration assemblée du dispositif 3. Par ailleurs, l'actionneur électromécanique 11 peut être configuré pour entraîner un arbre d'entraînement sur lequel s'enroule des cordons de déplacement et/ou d'orientation de lames de l'écran 2.

## Revendications

1. Actionneur électromécanique (11) pour installation de fermeture, d'occultation ou de protection solaire (6), l'actionneur électromécanique (11) comprenant un moteur électrique (16), un carter (17), un module mécanique de filtrage de vibrations (33 ; 33a ; 33b ; 33c), un module d'absorption de vibrations (130) et un support de couple (21), insérés au moins partiellement dans le carter (17), le module mécanique de filtrage de vibrations (33 ; 33a ; 33b; 33c) comprenant une première extrémité (35, 135) et une deuxième extrémité (39, 139), séparées par une longueur L,
- la première extrémité (35, 135) du module mécanique de filtrage de vibrations (33 ; 33a ; 33b ; 33c) étant liée mécaniquement directement ou indirectement au carter (17),
- la deuxième extrémité (39, 139) du module mécanique de filtrage de vibrations (33 ; 33a ; 33b ; 33c) étant liée mécaniquement au support de couple (21),
le module mécanique de filtrage de vibrations (33 ; 33a ; 33b ; 33c)-assurant la liaison mécanique entre le carter (17) et le support de couple en rotation autour d'un premier axe (X) de l'actionneur,
l'actionneur électromécanique (11) étant **caractérisé par** le module mécanique de filtrage de vibrations (33; 33a; 33b; 33c) permettant de transmettre principalement, voire exclusivement, les couples autour du premier axe (X) du moteur électrique et/ou du carter au support de couple,
le module d'absorption de vibrations liant mécaniquement le carter (17) au support de couple (21) en translation perpendiculairement au premier axe (X) de l'actionneur en autorisant un degré de liberté en rotation entre le carter (17) et le support de couple (21) autour du premier axe (X).

2. Actionneur selon la revendication précédente, **caractérisé en ce que** le module mécanique de filtrage de vibrations (33 ; 33a ; 33b ; 33c) comprend un joint d'Oldham ou un joint de Schmidt.

3. Actionneur la revendication 1, **caractérisé en ce que** le module mécanique de filtrage de vibrations (33a) comprend au moins :
- une première portion d'extrémité (35) comprenant un premier anneau (37),
- une portion intermédiaire (36) ; et
- une pluralité de premiers bras (38), chaque premier bras (38) reliant la portion intermédiaire (36) au premier anneau (37).

4. Actionneur selon la revendication 1, **caractérisé en ce que** le module mécanique de filtrage de vibrations (33b) comprend plusieurs plateaux annulaires (220) disposés perpendiculairement au premier axe et juxtaposés le long du premier axe, dont au moins un plateau annulaire intermédiaire (220i), chaque plateau annulaire intermédiaire étant relié à chacun des deux plateaux (220) qui lui sont adjacents par au moins trois ponts de connexion (228).

5. Actionneur selon l'une des revendications précédentes, **caractérisé en ce que** le carter (17) recouvre partiellement ou intégralement le module mécanique de filtrage de vibrations (33 ; 33a ; 33b ; 33c) et/ou le module d'absorption de vibrations (130).

6. Actionneur selon l'une des revendications précédentes, **caractérisé en ce que** le module d'absorption de vibrations (130) comprend une première bague (131) en matériau souple, notamment en matériau élastomère et/ou viscoélastique, disposée autour d'une partie (210) du support de couple (31).

7. Actionneur selon la revendication précédente, **caractérisé en ce que** la première bague (131) en matériau souple comprend des bossages formant sa ou ses surfaces en contact avec le carter et/ou le support de couple.

8. Actionneur selon la revendication 6 ou la revendication 7, **caractérisé en ce que** le module d'absorption de vibrations (130) comprend une deuxième bague (132) en matériau rigide, disposée autour de la première bague (131) ou insérée dans la première bague (131).

9. Actionneur selon la revendication précédente, **caractérisé en ce que** la deuxième bague (132) en matériau rigide comprend des zones de renforcement et/ou de surépaisseur.

10. Actionneur selon la revendication 8 ou la revendication 9, **caractérisé en ce que** la deuxième bague comprend au moins un élément de fixation (133 ; 137) au carter (17), notamment au moins une nervure (137) et/ou au moins une rainure et/ou au moins un trou (133), en particulier au moins un trou taraudé.

11. Actionneur selon l'une des revendications précédentes, **caractérisé en ce que** le module d'absorption de vibrations comprend une collerette (138) disposée axialement entre le support du couple (31) et une extrémité axiale du carter (17).

12. Actionneur selon l'une des revendications précédentes, **caractérisé en ce que** le carter (17) et/ou le module d'absorption de vibrations (130) comprend une première butée (137a, 137b) et **en ce que** le support de couple (21) comprend une deuxième butée (212), les première et deuxième butées étant agencées de sorte à coopérer par contact pour limiter le déplacement en rotation du carter autour du premier axe relativement au support de couple, notamment les première et deuxième butées étant destinées à coopérer par contact lorsqu'un couple supérieur au couple nominal, notamment supérieur ou égal à 110 % du couple nominal, est produit par le moteur électrique.

13. Actionneur selon l'une des revendications précédentes, **caractérisé en ce qu'**il comprend un logement (241) d'au moins une batterie dans le carter (17).

14. Installation domotique de fermeture, d'occultation ou de protection solaire (6) comprenant un écran (2), un tube d'enroulement (4) et un actionneur électromécanique (11) selon l'une quelconque des revendications précédentes, l'écran (2) étant enroulable sur le tube d'enroulement (4) entraîné en rotation par l'actionneur électromécanique (11).

## Patentansprüche

1. Elektromechanischer Aktor (11) für eine Schließ-, Verdeckungs- oder Sonnenschutzeinrichtung (6), wobei der elektromechanische Aktor (11) einen Elektromotor (16), ein Gehäuse (17), ein mechanisches Vibrationsfilterungsmodul (33; 33a; 33b; 33c), ein Vibrationsabsorptionsmodul (130) und eine Drehmomentstütze (21), die wenigstens teilweise in das Gehäuse (17) eingefügt sind, umfasst, wobei das mechanische Vibrationsfilterungsmodul (33; 33a; 33b; 33c) ein erstes Ende (35, 135) und ein zweites Ende (39, 139) umfasst, die durch eine Länge L getrennt sind,
- wobei das erste Ende (35, 135) des mechanischen Vibrationsfilterungsmoduls (33; 33a; 33b; 33c) direkt oder indirekt mechanisch mit dem Gehäuse (17) verbunden ist,
- wobei das zweite Ende (39, 139) des mechanischen Vibrationsfilterungsmoduls (33; 33a; 33b; 33c) mechanisch mit der Drehmomentstütze (21) verbunden ist, wobei das mechanische Vibrationsfilterungsmodul (33; 33a; 33b; 33c):3c):
- die mechanische Verbindung zwischen dem Gehäuse (17) und der Drehmomentstütze um eine erste Achse (X) des Aktors gewährleistet, wobei der elektromechanische Aktor (11) durch das mechanische Vibrationsfilterungsmodul (33; 33a; 33b; 33c) gekennzeichnet ist
- es ermöglicht, hauptsächlich, ja sogar ausschließlich die Drehmomente um die erste Achse (X) des Elektromotors und/oder des Gehäuses auf die Drehmomentstütze zu übertragen,
wobei das Vibrationsabsorptionsmodul das Gehäuse (17) mechanisch mit der Drehmomentstütze (21) translatorisch senkrecht zur ersten Achse (X) des Aktors verbindet, wobei ein Drehfreiheitsgrad zwischen dem Gehäuse (17) und der Drehmomentstütze (21) um die erste Achse (X) zugelassen wird.

2. Aktor nach dem vorhergehenden Anspruch, **dadurch gekennzeichnet, dass** das mechanische Vibrationsfilterungsmodul (33; 33a; 33b; 33c) eine Oldham-Kupplung oder eine Schmidt-Kupplung umfasst.

3. Aktor nach Anspruch 1, **dadurch gekennzeichnet, dass** das mechanische Vibrationsfilterungsmodul (33a) wenigstens Folgendes umfasst:
- einen ersten Endabschnitt (35), der ein erstes Ringelement (37) umfasst,
- einen Zwischenabschnitt (36); und
- eine Mehrzahl von ersten Armen (38), wobei jeder erste Arm (38) den Zwischenabschnitt (36) mit dem ersten Ringelement (37) verbindet.

4. Aktor nach Anspruch 1, **dadurch gekennzeichnet, dass** das mechanische Vibrationsfilterungsmodul (33b) mehrere ringförmige Platten (220) umfasst, die senkrecht zur ersten Achse angeordnet sind und entlang der ersten Achse nebeneinander liegen, davon wenigstens eine ringförmige Zwischenplatte (220i), wobei jede ringförmige Zwischenplatte durch wenigstens drei Verbindungsbrücken (228) mit jeder der zwei an sie angrenzenden Platten (220) verbunden ist.

5. Aktor nach einem der vorhergehenden Ansprüche, **dadurch gekennzeichnet, dass** das Gehäuse (17) das mechanische Vibrationsfilterungsmodul (33; 33a; 33b; 33c) und/oder das Vibrationsabsorptionsmodul (130) teilweise oder vollständig abdeckt.

6. Aktor nach einem der vorhergehenden Ansprüche, **dadurch gekennzeichnet, dass** das Vibrationsabsorptionsmodul (130) einen ersten Ring (131) aus weichem Material, insbesondere aus Elastomer- und/oder viskoelastischem Material umfasst, der um einen Abschnitt (210) der Drehmomentstütze (31) angeordnet ist.

7. Aktor nach dem vorhergehenden Anspruch, **dadurch gekennzeichnet, dass** der erste Ring (131) aus weichem Material Erhebungen umfasst, die seine Fläche oder Flächen bilden, die mit dem Gehäuse und/oder der Drehmomentstütze in Kontakt steht bzw. stehen.

8. Aktor nach Anspruch 6 oder 7, **dadurch gekennzeichnet, dass** das Vibrationsabsorptionsmodul (130) einen zweiten Ring (132) aus starrem Material umfasst, der um den ersten Ring (131) angeordnet oder in den ersten Ring (131) eingefügt ist.

9. Aktor nach dem vorhergehenden Anspruch, **dadurch gekennzeichnet, dass** der zweite Ring (132) aus starrem Material Verstärkungs- und/oder Überdickenbereiche umfasst.

10. Aktor nach Anspruch 8 oder 9, **dadurch gekennzeichnet, dass** der zweite Ring wenigstens ein Element zur Befestigung (133; 137) am Gehäuse (17) umfasst, insbesondere wenigstens eine Rippe (137) und/oder wenigstens eine Rille und/oder wenigstens ein Loch (133), insbesondere wenigstens ein Loch mit Innengewinde.

11. Aktor nach einem der vorhergehenden Ansprüche, **dadurch gekennzeichnet, dass** das Vibrationsabsorptionsmodul einen Kragen (138) umfasst, der axial zwischen der Drehmomentstütze (31) und einem Axialende des Gehäuses (17) angeordnet ist.

12. Aktor nach einem der vorhergehenden Ansprüche, **dadurch gekennzeichnet, dass** das Gehäuse (17) und/oder das Vibrationsabsorptionsmodul (130) einen ersten Anschlag (137a, 137b) umfasst, und dadurch, dass die Drehmomentstütze (21) einen zweiten Anschlag (212) umfasst, wobei der erste und zweite Anschlag so angeordnet sind, dass sie durch Kontakt zusammenwirken, um die Drehbewegung des Gehäuses um die erste Achse bezogen auf die Drehmomentstütze zu begrenzen, wobei insbesondere der erste und zweite Anschlag dazu bestimmt sind, durch Kontakt zusammenwirken, wenn ein Drehmoment, das größer als das Nenndrehmoment ist, insbesondere größer als oder gleich 110 % des Nenndrehmoments, vom Elektromotor erzeugt wird.

13. Aktor nach einem der vorhergehenden Ansprüche, **dadurch gekennzeichnet, dass** er eine Aufnahme (241) für wenigstens eine Batterie im Gehäuse (17) umfasst.

14. Heimautomatisierungseinrichtung zum Schließen, zur Verdeckung oder zum Sonnenschutz (6) umfassend einen Schirm (2), ein Aufrollrohr (4) und einen elektromechanischen Aktor (11) nach einem der vorhergehenden Ansprüche, wobei der Schirm (2) auf dem Aufrollrohr (4) aufrollbar ist, das von dem elektromechanischen Aktor (11) gedreht wird.

## Claims

1. An electromechanical actuator (11) for a closure, covering or solar protection installation (6), the electromechanical actuator (11) comprising an electric motor (16), a casing (17), a vibration-filtering mechanical module (33; 33a; 33b; 33c), a vibration-absorption module (130) and a torque support (21), inserted at least partially into the casing (17), the vibration-filtering mechanical module (33; 33a; 33b; 33c) comprising a first end (35, 135) and a second end (39, 139), separated by a length L,
- the first end (35, 135) of the vibration-filtering mechanical module (33; 33a; 33b; 33c) being mechanically linked directly or indirectly to the casing (17),
- the second end (39, 139) of the vibration-filtering mechanical module (33; 33a; 33b; 33c) being mechanically linked to the torque support (21),
the vibration-filtering mechanical module (33; 33a; 33b; 33c) ensuring the mechanical link between the casing (17) and the torque support in rotation about a first axis (X) of the actuator,
the electromechanical actuator (11) being **characterized in that** the vibration-filtering mechanical module (33; 33a; 33b; 33c) allows to transmit, primarily, or even exclusively, the torques around the first axis (X) of the electric motor and/or of the casing to the torque support,
the vibration-absorption module mechanically linking the casing (17) to the torque support (21) in translation perpendicularly to the first axis (X) of the actuator by allowing a degree of freedom in rotation between the casing (17) and the torque support (21) about the first axis (X).

2. The actuator as claimed in the preceding claim, **characterized in that** the vibration-filtering mechanical module (33; 33a; 33b; 33c) comprises an Oldham coupling or a Schmidt coupling.

3. The actuator as claimed in claim 1, **characterized in that** the vibration-filtering mechanical module (33a) comprises at least:
- a first end portion (35) comprising a first ring (37),
- an intermediate portion (36); and
- a plurality of first arms (38), each first arm (38) linking the intermediate portion (36) to the first ring (37).

4. The actuator as claimed in claim 1, **characterized in that** the vibration-filtering mechanical module (33b) comprises several annular plates (220) disposed perpendicularly to the first axis and juxtaposed along the first axis, including at least one intermediate annular plate (220i), each intermediate annular plate being linked to each of the two plates (220) which are adjacent to it by at least three connection bridges (228).

5. The actuator as claimed in one of the preceding claims, **characterized in that** the casing (17) partially or fully covers the vibration-filtering mechanical module (33; 33a; 33b; 33c) and/or the vibration-absorption module (130).

6. The actuator as claimed in one of the preceding claims, **characterized in that** the vibration-absorption module (130) comprises a first bushing (131) made of flexible material, notably of elastomer and/or viscoelastic material, disposed around a part (210) of the torque support (21).

7. The actuator as claimed in the preceding claim, **characterized in that** the first bushing (131) made of flexible material comprises bosses forming its surface or surfaces in contact with the casing and/or the torque support.

8. The actuator as claimed in claim 6 or claim 7, **characterized in that** the vibration-absorption module (130) comprises a second bushing (132) made of rigid material, disposed around the first bushing (131) or inserted into the first bushing (131).

9. The actuator as claimed in the preceding claim, **characterized in that** the second bushing (132) made of rigid material comprises zones of reinforcement and/or of overthickness.

10. The actuator as claimed in claim 8 or claim 9, **characterized in that** the second bushing comprises at least one fixing element (133; 137) for fixing to the casing (17), notably at least one rib (137) and/or at least one groove and/or at least one hole (133), in particular at least one tapped hole.

11. The actuator as claimed in one of the preceding claims, **characterized in that** the vibration-absorption module comprises a flange ring (138) disposed axially between the torque support (21) and an axial end of the casing (17).

12. The actuator as claimed in one of the preceding claims, **characterized in that** the casing (17) and/or the vibration-absorption module (130) comprises a first stop (137a, 137b) and **in that** the torque support (21) comprises a second stop (212), the first and second stops being arranged so as to cooperate by contact to limit the rotational displacement of the casing about the first axis relative to the torque support, notably the first and second stops being intended to cooperate by contact when a torque greater than the nominal torque, notably greater than or equal to 110% of the nominal torque, is produced by the electric motor.

13. The actuator as claimed in one of the preceding claims, **characterized in that** it comprises a housing (241) for at least one battery in the casing (17).

14. A home-automation closure, covering or solar protection installation (6) comprising a screen (2), a winding tube (4) and an electromechanical actuator (11) as claimed in any one of the preceding claims, the screen (2) being able to be wound on the winding tube (4) driven in rotation by the electromechanical actuator (11).
